# DEMANDE DE BREVET EUROPEEN

(11) **EP 2 506 225 A1**
(43) Date de publication de la demande: **03.10.2012**
(21) Numéro de dépôt: 12161471.3
(22) Date de dépôt: 27.03.2012
(51) Int. Cl.: G07D 7/00, G07D 7/12, G06K 9/78

(54) **Dispositif d'authentification optique pour authentifier un objet et procédé d'authentification optique**

(30) Priorité: 29.03.2011 FR 1152597
(71) Demandeur: Université de Technologie de Troyes, 10010 Troyes Cédex (FR)
(72) Inventeur: Toury, Timothée Pol Jean, 10190 PRUGNY (FR); Barchiesi, Dominique, 10000 TROYES (FR); Shen, Hong, 10000 TROYES (FR); Brasselet, Sophie, 13190 ALLAUCH (FR)
(74) Mandataire: Novagraaf Technologies

(57) **Abrégé**

L'invention concerne le domaine de l'authentification d'objets et de lutte contre la contrefaçon. L'invention concerne plus particulièrement un dispositif d'authentification optique.

Le dispositif d'authentification optique 1 est tel qu'il comprend une pluralité de plots 2 nanométriques, ladite pluralité étant distribuée pour former un réseau 3 homogène, chaque plot étant un diffusant et diffractant optique non-linéaire.

Ainsi, une illumination cohérente d'au moins une partie quelconque du dispositif d'authentification optique selon un angle d'incidence, une longueur d'onde et une polarisation déterminés produit avantageusement une réponse optique non-linéaire propre à permettre l'authentification de l'objet, sans pour autant fournir suffisamment d'informations pour permettre de reproduire le dispositif d'authentification optique.

L'invention concerne également un procédé d'authentification optique pour authentifier un objet solidaire du dispositif d'authentification optique.

## Description

L'invention concerne le domaine de l'authentification d'objets et de lutte contre la contrefaçon.

L'invention concerne plus particulièrement un dispositif d'authentification optique et un procédé d'authentification optique pour authentifier un objet rendu solidaire dudit dispositif d'authentification.

Il est connu de rendre solidaire un dispositif d'authentification et un objet pour permettre d'en prouver l'authenticité. Au sens de la présente invention, on considérera donc indistinctement l'authentification du dispositif et l'authentification de l'objet dont il est solidaire.

Dans le cadre de la protection contre la contrefaçon, il est intéressant de pouvoir authentifier des objets administratifs (documents tels que passeport, carte nationale d'identité, ...), des objets de valeur ou fortement sujets à la contrefaçon (billet de banque, article de marque, ...) et/ou des objets pour lesquels on désire une certification à un très haut degré de fiabilité (pièces aéronautiques, ...). Les dispositifs d'authentification courants comprennent entre autres des hologrammes, des filigranes, et des colorants fluorescents.

Cependant, ces dispositifs d'authentification sont destinés à être authentifiés principalement par une observation directe en lumière incohérente à l'oeil nu et jouent leur rôle de protection de deux manières. Premièrement, ils sont coûteux à reproduire en petites séries ; ainsi, si le coût de fabrication d'un objet falsifié et/ou de son dispositif d'authentification est supérieur au gain espéré, la contrefaçon n'est économiquement plus rentable. Deuxièmement, leur structure et/ou leur procédé de fabrication sont régulièrement modifiés pour rendre d'autant plus difficile leur reproduction, notamment frauduleuse.

Il est à noter que ces dispositifs d'authentification ne sont pas exclusifs les uns des autres, mais qu'au contraire leur accumulation est parfois souhaitable pour augmenter le niveau de sécurité.

Il est à noter également que les propriétés physiques de l'objet à authentifier peuvent aussi servir à l'authentification de celui-ci. Parmi ces propriétés physiques, on peut citer l'épaisseur de billets de banque ou la colorimétrie des papiers.

La présente invention propose un dispositif d'authentification optique dont la reproduction par rétro-ingénierie est quasi-impossible et économiquement démotivante, pouvant également servir de dispositif de marquage d'un objet, et un procédé d'authentification optique dont la mise en oeuvre permet l'authentification du dispositif.

A cette fin, le dispositif d'authentification optique est essentiellement tel qu'il comprend une première pluralité de plots nanométriques distribuée à la surface d'un support pour former un réseau de préférence homogène, chaque plot de la première pluralité étant un diffusant et diffractant optique non-linéaire.

Ainsi, une illumination cohérente (monochromatique ou quasi-monochromatique en onde plane progressive) selon un angle d'incidence, une longueur d'onde et une polarisation déterminés illuminant au moins une partie du dispositif d'authentification optique comprenant plusieurs plots de ladite première pluralité produit avantageusement une réponse optique non-linéaire caractéristique du dispositif d'authentification optique, ladite réponse étant propre à permettre l'authentification. Ladite réponse optique non-linéaire est plus particulièrement un produit de convolution de la réponse optique non-linéaire de la partie illuminée du dispositif par la réponse optique non-linéaire de chaque plot illuminé. Ainsi, elle ne fournit pas suffisamment d'informations sur les caractéristiques techniques du dispositif (telles que la distribution, la composition, la forme et la taille des plots) pour en permettre sa reproduction (notamment frauduleuse). La dimension nanométrique des plots rend en outre quasi-impossible toute ingénierie inverse.

De préférence, chaque plot s'étend à distance du support selon un axe et a, dans un plan perpendiculaire à cet axe, une section de la forme d'un disque, oblongue, ovale, la forme d'un trèfle, d'une étoile ou une autre forme. On peut prévoir que l'axe de chaque plot est perpendiculaire au support.

La hauteur de chaque plot le long de l'axe selon lequel il s'étend peut être identique pour tous les plots, par type de plots, ou non, voire aléatoire. Eventuellement, le volume unitaire dans lequel s'inscrit chaque plot est identique pour tous les plots (à hauteur identique ou non).

L'efficacité lumineuse, définie ultérieurement, de la réponse optique non-linéaire dépend de l'illumination (longueur d'onde, angle d'incidence, polarisation). En outre, elle dépend de la forme, de la composition, des dimensions d'un plot, ainsi que de la distance entre deux plots adjacents et de la répartition et/ou de l'orientation des plots sur le support.

Au regard de la forme d'un plot, l'efficacité lumineuse peut être optimisée en complexifiant la forme du plot, par exemple avec des formes de plot ne présentant pas de centrosymétrie.

Au regard de la composition d'un plot, l'efficacité lumineuse peut être optimisée en proposant différents matériaux optiquement efficaces et/ou en proposant de superposer et/ou juxtaposer plusieurs de ces matériaux, pour composer un plot. On distingue les matériaux intrinsèquement optiquement non-linéaires, tels que le niobiate de lithium, les cristaux de type KTP (phosphate de potassium titanyl) ou les cristaux de type KDP (phosphate de potassium dideutérium ou dihydrogène), des matériaux non intrinsèquement optiquement non-linéaires, tels que l'or ou l'argent, ces derniers devant être superposés et/ou juxtaposés entre eux ou avec au moins matériau intrinsèquement optiquement non-linéaire, et/ou mis en une forme non centrosymétrique, pour composer un plot optiquement non-linéaire. Ainsi, chaque plot comprend :
- une ou plusieurs parties, l'une au moins des parties comprenant du niobiate de lithium, des cristaux de type KTP ou des cristaux de type KDP, ou
- plusieurs parties, dont au moins une partie comprend de l'or et au moins une autre partie comprend de l'argent, ou
- plusieurs parties dont au moins une partie comprend de l'or ou de l'argent et dont au moins une autre partie comprend du niobiate de lithium, des cristaux de type KTP ou des cristaux de type KDP, ou
- une partie de forme non centrosymétrique comprenant de l'or ou de l'argent.

Éventuellement, chaque partie peut avoir une forme respective.

On peut prévoir par exemple qu'un plot centrosymétrique de par sa forme, ne soit pas centrosymétrique de par sa composition, c'est-à-dire en comprenant plusieurs matériaux superposés et/ou juxtaposés.

On peut également prévoir qu'un plot non centrosymétrique de par sa forme, soit également non centrosymétrique de par sa composition, c'est-à-dire en comprenant plusieurs matériaux superposés et/ou juxtaposés.

On peut donc définir des types de plot. Les plots d'un même type sont par exemple identiques entre eux dans leur forme et/ou dans leur composition. La première pluralité au moins de plots peut comprendre plusieurs types de plots. Dans un mode de réalisation, les axes des plots de chaque type sont parallèles entre eux.

Au regard des dimensions d'un plot, chaque plot s'inscrit dans un volume unitaire respectif. Eventuellement, tous les volumes unitaires respectifs sont identiques entre eux.

Dans un mode de réalisation, chaque plot s'étend à distance du support selon une hauteur comprise entre 30 et 80 nm et sa section dans un plan perpendiculaire à cette hauteur s'inscrit par exemple dans un carré de 100 à 250 nm de côté ou dans un cercle de 100 à 250 nm de diamètre. Le volume unitaire est compris entre 300 000 nm³ et 10 000 000 nm³, et en particulier égal à 1 000 000 nm³. De telles dimensions pour un plot permettent avantageusement d'optimiser l'efficacité lumineuse de la réponse optique non-linéaire de celui-ci.

Au regard de la distance entre deux plots adjacents du dispositif, cette distance est comprise de préférence entre 10 nm et 3 µm. La distance entre deux plots adjacents peut s'entendre comme la distance la plus courte sur le support entre deux points situés sur la périphérie respective de chaque plot correspondant. De préférence, deux plots adjacents sont distants l'un de l'autre, c'est-à-dire qu'il n'existe pas de contact entre eux.

La distance entre deux plots adjacents peut être constante ou non, de sorte par exemple à répartir les plots sur le support selon des réseaux décrits ci-après. Les dimensions des plots dans un plan perpendiculaire à leur hauteur et la distance moyenne dans le plan du support entre plots adjacents définissent une densité surfacique de plots, c'est-à-dire le nombre moyen de plots par unité de surface du support.

Au regard de la distribution des plots, l'efficacité lumineuse de la réponse optique non-linéaire de la première pluralité de plots peut être optimisée par une distribution en réseau homogène, en particulier pour des plots de formes différentes.

Dans un mode de réalisation, la première pluralité de plots nanométriques est distribuée sur le support pour former un réseau plan homogène cristallin ou quasi-cristallin.

Dans un mode de réalisation, la première pluralité de plots nanométriques est distribuée sur le support pour former une juxtaposition ou une superposition de réseaux plans homogènes cristallins et/ou quasi-cristallins.

Le dispositif d'authentification se décline ainsi avantageusement sous autant de variantes plus ou moins complexes rendant encore plus improbable sa reproduction.

Au regard de l'orientation des plots entre eux, l'efficacité lumineuse de la réponse optique non-linéaire de la première pluralité de plots peut être optimisée en variant leur orientation relative.

Dans un mode de réalisation, les plots 2 non centrosymétriques sont distribués sur le support selon des orientations différentes, de sorte de créer une interférence constructive entre les réponses optiques non-linéaires des plots (2)

Pour sa fabrication, le dispositif d'authentification optique est par exemple imprimé par lithographie dite « nanoimprint » ou par lithographie à faisceau d'électrons, ou par lithographie holographique, ou usiné par une technique mettant en oeuvre un faisceau d'ions focalisé.

Dans un mode de réalisation, le dispositif a une forme dans le plan du support qui s'inscrit dans un carré d'au moins 50 µm de côté, ou dans un cercle d'au moins 50 µm de diamètre. Le dispositif comprend ainsi avantageusement au moins quelques dizaines de plots nanométriques.

Dans un mode de réalisation, la première pluralité de plots nanométriques au moins est recouverte d'une couche protectrice réalisée en un matériau optiquement neutre et transparent, ce qui accroit avantageusement la longévité du dispositif.

Dans un mode de réalisation, le dispositif comprend en outre une seconde pluralité de plots nanométriques réalisés en un matériau optiquement neutre et transparent pour la lumière incidente utilisée pour l'authentification, c'est-à-dire qu'ils ne sont pas des diffusants et diffractants optiques non-linéaires à la longueur d'onde utilisée et n'influent pas sur la réponse optique non-linéaire du dispositif, mais servent de leurres, rendant avantageusement toute tentative de reproduction (notamment frauduleuse) encore plus difficile.

L'invention concerne également un procédé d'authentification optique pour authentifier un objet.

Le procédé d'authentification optique est essentiellement tel qu'il comprend:
- une étape préliminaire de solidarisation, où l'on rend solidaires un dispositif d'authentification optique, tel que défini ci-dessus, et un objet à authentifier ou un appendice solidaire de celui-ci,
- une étape d'illumination par une source de lumière cohérente (monochromatique ou quasi-monochromatique en onde plane progressive) d'au moins une partie dudit dispositif d'authentification optique, pour produire une figure de diffraction,
- une étape d'imagerie optique réalisée par un dispositif d'imagerie optique pour capter en champ lointain la réponse optique non-linéaire du dispositif à son illumination, c'est-à-dire capter en champ lointain ladite figure de diffraction, et
- une étape de comparaison de la figure de diffraction précédemment obtenue à une figure de diffraction de référence préalablement stockée dans une base de données, pour permettre l'authentification de l'objet.

De préférence, on prévoit une étape d'enregistrement numérique de la figure de diffraction captée en champ lointain.

Dans un mode de réalisation, l'illumination est d'une puissance déterminée propre à détruire au moins la partie du dispositif d'authentification optique qu'elle illumine.

Ainsi, le procédé d'authentification optique permet avantageusement une et une seule authentification par dispositif d'authentification optique.

Dans un mode de réalisation, le procédé comprend en outre une étape de traitement de la figure de diffraction captée en champ lointain et/ou de la figure de diffraction de référence, propre à lui faire correspondre une valeur binaire ou alphanumérique caractéristique.

Ainsi, le procédé d'authentification optique comprend une étape consistant à créer une relation entre un ensemble de figures de diffraction et un ensemble de valeurs binaires ou alphanumériques, telles que des codes-barres ou des numéros de série, dont les usages sont bien connus.

Dans un mode de réalisation, le procédé comprend en outre une étape de simulation réalisée par un ordinateur muni d'un logiciel propre à calculer une figure de diffraction de référence caractérisant un dispositif d'authentification optique donné pour un angle d'incidence, une longueur d'onde et une polarisation d'illumination donnés, et une étape de sauvegarde de ladite figure de diffraction de référence dans une base de données. De préférence, on prévoit de simuler une pluralité de figures de références pour un dispositif d'authentification optique donné, en faisant varier l'angle d'incidence et/ou la longueur d'onde et/ou la polarisation d'illumination.

Ainsi, pour une illumination donnée, le procédé d'authentification optique permet de produire par simulation la figure de diffraction de référence correspondant aux données caractérisant un dispositif d'authentification optique donné (telles que le nombre, la distribution, la composition, la forme et la taille des plots), sans requérir ni l'étape d'illumination, ni l'étape d'imagerie optique d'un dispositif réel.

D'autres caractéristiques et avantages de l'invention ressortiront clairement de la description qui en est faite ci-après, à titre indicatif et nullement limitatif, en référence aux dessins annexés, dans lesquels :
- la figure 1 représente un dispositif d'authentification optique selon l'invention,
- la figure 2 représente des plots de formes et de compositions variées,
- la figure 3 représente schématiquement un système permettant la mise en oeuvre du procédé d'authentification optique selon l'invention,
- les figures 4a à 4c représentent des exemples de réalisation du dispositif d'authentification optique selon l'invention dans lesquels les plots sont distribués en réseau, et
- la figure 5 illustre un mode de réalisation du procédé d'authentification optique selon l'invention.

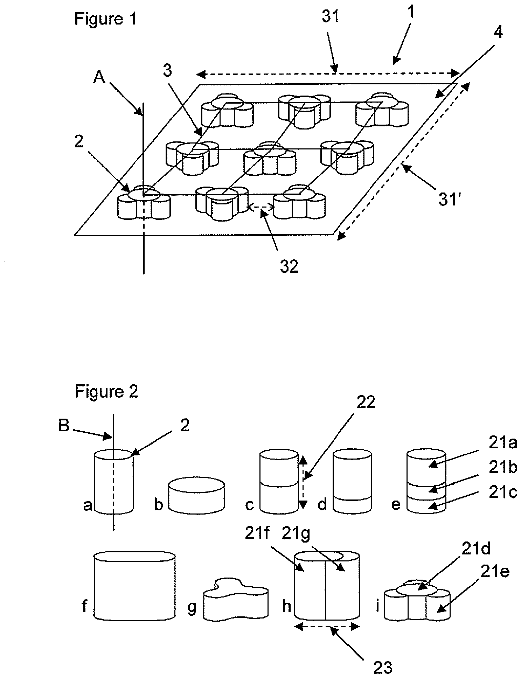

Le dispositif d'authentification optique 1 va maintenant être décrit en référence aux figures 1 et 2.

Dans son acceptation la plus large, le dispositif d'authentification optique 1 comprend une première pluralité de plots 2 de tailles nanométriques. Ladite première pluralité est distribuée à la surface d'un support 4 pour former un réseau 3 plan homogène. Chaque plot 2 de la première pluralité est un diffusant et diffractant optique non-linéaire.

Par réseau homogène, on entend que les propriétés physiques, donc optiques, du dispositif sont constantes pour la totalité du dispositif. Autrement dit, une partie du dispositif a les mêmes propriétés optiques et produit, en réponse à son illumination, une même réponse optique qu'une autre partie du dispositif.

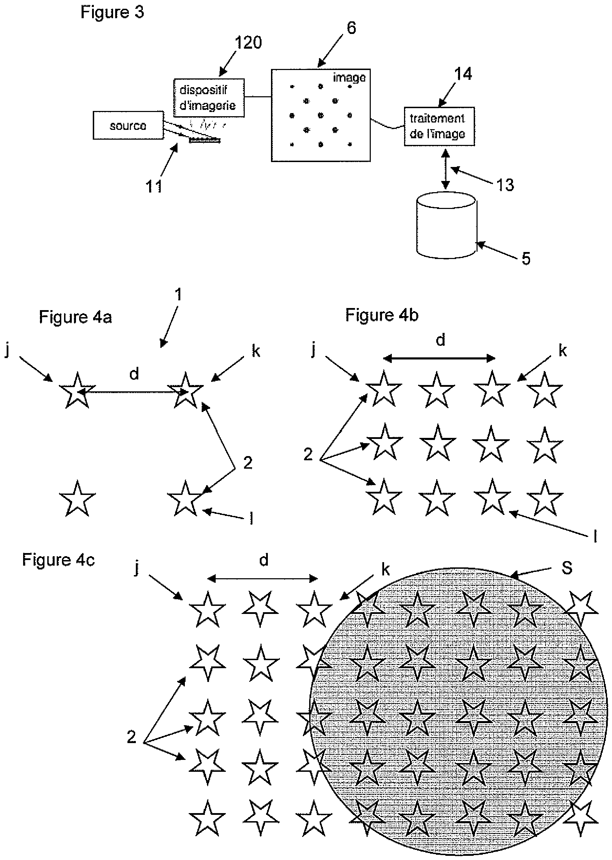

Comme illustré sur la figure 4c, notons S la surface de la partie illuminée du dispositif et d le pas du réseau ; pour que la partie illuminée du dispositif comprenne un ensemble de plots 2, les dimensions de la surface S doivent être au moins de l'ordre de quelques fois le pas du réseau d, préférentiellement quelques dizaines de fois le pas du réseau d, de sorte que quelques dizaines, préférentiellement quelques milliers de plots, respectivement, soient illuminés.

Chaque plot, lorsqu'il est soumis à un champ électromagnétique incident, en l'espèce à un flux de photons incidents ou une illumination, absorbe, diffuse et diffracte une partie de ce champ. Le champ électromagnétique diffusé et diffracté par un plot dépend, via une indicatrice de diffusion, de l'angle d'incidence, de la longueur d'onde et de la polarisation du champ électromagnétique incident, l'indicatrice de diffusion prenant en compte la forme, les dimensions et la composition du plot, c'est-à-dire le type de plot. Le champ électromagnétique diffusé et diffracté par un plot est relié au champ électromagnétique incident sur ce plot par une relation faisant intervenir des coefficients représentatifs d'éléments de la géométrie et de la composition du plot,

On entend par indicatrice de diffusion, une représentation dans l'espace, sous forme d'une surface en coordonnées polaires, de la répartition angulaire des valeurs relatives du champ électromagnétique ou de la luminance lumineuse d'un élément de surface d'un corps diffusant par réflexion ou par transmission.

Ainsi, pour une illumination donnée, au moins une direction d'observation ou de lecture par un capteur de la réponse otique non-linéaire d'un plot est privilégiée, et dépend de l'indicatrice de diffusion de ce plot. Les directions d'observation privilégiées sont dites d'interférences constructives.

Lorsqu'un ensemble de plots 2 est soumis à un champ électromagnétique incident, le champ électromagnétique diffusé et diffracté par cet ensemble présente une partie (composée d'une réponse optique linéaire et de ses harmoniques) cohérente avec le champ électromagnétique incident, et une partie non cohérente appelée fluorescence, éventuellement fluorescence à 'n' photons. Le champ incident et le champ diffusé et diffracté ayant une partie cohérente entre eux génèrent notamment, par un processus d'optique non-linéaire appelé « génération de seconde harmonique », des photons ayant une fréquence double par rapport à la fréquence des photons incidents.

La génération de seconde harmonique (GSH) est un processus d'optique non-linéaire également appelé doublage de fréquence dans lequel des photons interagissant avec un matériau optiquement non-linéaire, ici les plots 2, sont combinés pour former de nouveaux photons avec le double de l'énergie, donc avec le double de la fréquence ou la moitié de la longueur d'onde des photons du champ électromagnétique incident.

La composante du champ électromagnétique diffusé et diffracté ayant une fréquence double ou une longueur d'onde moitié de celle du champ électromagnétique incident constitue la partie d'intérêt de la réponse optique non-linéaire du dispositif à son illumination. Par exemple, si le champ incident a une longueur d'onde de 800 nm, la partie d'intérêt de la réponse optique non-linéaire du dispositif a une longueur d'onde de 400 nm.

Il est préféré que la partie d'intérêt de la réponse optique non-linéaire du dispositif à son illumination, c'est-à-dire la capacité du dispositif à convertir les photons incidents en photons de fréquence double, soit significative. Par la suite, les termes 'efficacité lumineuse' ou 'efficacité optique', du dispositif d'authentification optique font référence à cette capacité de conversion, préférée haute. Il est à noter que l'efficacité optique peut être exprimée en picomètre par volt dans le contexte de la génération de seconde harmonique.

Les considérations ci-dessous définissent quels paramètres principaux du dispositif d'authentification optique lui permettent de justifier d'une efficacité optique satisfaisante à fin d'au moins une authentification.

La partie d'intérêt de la réponse optique non-linéaire d'un ensemble de N plots 2 illuminés est, en champ lointain, proportionnelle à la somme, sur les N plots illuminés de cet ensemble, des composantes des champs électromagnétiques diffusés et diffractés par chaque plot.

Notons que le rapport du nombre N de plots de la partie illuminée du dispositif sur la surface S de la partie illuminée du dispositif, définit la densité surfacique n de plots 2 sur cette partie du dispositif, qui est, du fait de l'homogénéité du réseau, la même qu'en une autre partie du dispositif, ainsi que sur la totalité du dispositif. Ainsi, la partie d'intérêt de la réponse optique non-linéaire d'un ensemble de plots, ou équivalemment la composante du champ électromagnétique diffusé et diffracté ayant une fréquence double de celle du champ électromagnétique incident, est, en champ lointain, directement proportionnelle à la densité surfacique n de plots 2.

Par ailleurs, l'intensité, ou puissance par unité de surface, d'un champ électromagnétique est proportionnelle à la moyenne du carré du module du champ électromagnétique. Ainsi, l'intensité du champ électromagnétique diffusé et diffracté par un ensemble de plots 2 et ayant une fréquence double de celle du champ électromagnétique incident est directement proportionnelle au carré de la densité surfacique n de plots 2 et dépend des coefficients représentatifs de la géométrie et de la composition de chaque plot.

Le corollaire de ces considérations est que:
- la puissance lumineuse incidente peut être étendue/répartie sur le dispositif, ce qui permet de réduire la puissance surfacique transmise, donc l'endommagement du dispositif, tout en gardant une même puissance lumineuse diffusée, et
- la puissance lumineuse diffusée peut être significativement augmentée en augmentant la densité surfacique n de plots 2, tout en gardant une même puissance lumineuse incidente.

Il est donc possible de modifier l'étendue de la puissance lumineuse incidente et/ou la densité surfacique de plots 2, de façon à ce que le dispositif justifie d'une efficacité optique satisfaisante aux fins d'authentifications.

Dans un mode de réalisation, les plots du dispositif de la première pluralité au moins sont identiques entre eux.

Dans un autre mode de réalisation, au moins deux plots du dispositif sont différents entre eux, c'est-à-dire appartiennent à deux types différents.

Comme illustré sur la figure 2 et à titre non exhaustif, chaque plot:
- s'étend à distance du support selon un axe A et a, dans un plan perpendiculaire à cet axe A, une section de la forme d'un disque, oblongue ou de la forme d'un trèfle ou d'une étoile, et
- a une hauteur 22 selon laquelle il s'étend à distance du support comprise entre 30 et 80 nm et a une section dans un plan perpendiculaire à cette hauteur qui a des dimensions 23 comprises entre 100 et 250 nm.

Comme illustré sur la figure 2 et à titre non exhaustif, chaque plot peut en outre comprendre :
- une ou plusieurs parties, l'une au moins des parties comprenant du niobiate de lithium, des cristaux de type KTP ou des cristaux de type KDP, ou
- plusieurs parties, dont au moins une partie comprend de l'or et au moins une autre partie comprend de l'argent, ou
- plusieurs parties dont au moins une partie comprend de l'or ou de l'argent et dont au moins une autre partie comprend du niobiate de lithium, des cristaux de type KTP ou des cristaux de type KDP, ou
- une partie de forme non centrosymétrique comprenant de l'or ou de l'argent.

Éventuellement, chaque partie peut avoir une forme respective.

De façon générale, un plot non centrosymétrique, que ce soit de par sa forme et/ou sa composition, sera préféré à un plot centrosymétrique.

On entend par centrosymétrie une symétrie par rapport à un point.

Un plot peut avoir une forme présentant une centrosymétrie par rapport à un point. Plus particulièrement, le plot peut consister en un cylindre, tel que les plots a et b représentés sur la figure 2. Les plots de forme cylindrique a et b représentés sur la figure 2 sont constitués d'un seul matériau parmi le niobiate de lithium, les cristaux de type KTP, ou les cristaux de type KDP. Les plots de forme cylindrique peuvent éventuellement être constitués de plusieurs parties ou couches de matériaux différents, tel que les plots c, d et e représenté sur la figure 2 pour lequel les couches de matériaux sont superposées. A titre d'exemple non limitatif et à titre non exhaustif, le plot e de la figure 2 comprend une première couche 21a en or, une deuxième couche 21 b en argent et une troisième couche 21 c en niobiate de lithium.

Un plot dont la section dans le plan perpendiculaire à l'axe A selon lequel il s'étend à distance du support est oblongue, tel que le plot h représenté sur la figure 2, peut être constitué d'une partie 21f quasi-cylindrique réalisée en un premier matériau, par exemple de l'or, et d'une seconde partie 21g réalisée en un second matériau, par exemple de l'argent, cette seconde partie étant disposée contre la première pour donner au plot sa forme de section oblongue. Ainsi, le plot h de section oblongue, donc centrosymétrique de par sa forme, est composé d'au moins deux parties en matériaux différents juxtaposés, de façon à ne pas être centrosymétrique de par sa composition.

Un plot en forme de trèfle ou d'étoile, tel que les plots g et i représentés sur la figure 2, présente un nombre impair de branches de façon à ne pas être de forme centrosymétrique; ces formes sont très efficaces. Des plots ayant une forme de trèfle ou d'étoile à cinq, voire sept, branches sont plus difficiles à produire, mais du même coup sont plus difficiles à reproduire (notamment frauduleusement).

De plus, un plot dont la section dans un plan perpendiculaire à l'axe A selon lequel il s'étend à distance du dispositif est de la forme d'un trèfle ou d'une étoile, tel que le plot i représenté sur la figure 2, peut avoir une branche 21 e constituée d'un matériau différent de ses autres branches et/ou de sa partie centrale 21d. Ainsi, Un plot non centrosymétrique de par sa forme peut être composé d'au moins deux parties en matériaux différents de façon à être non centrosymétrique, également de par sa composition.

Dans le cas de plots n'ayant pas une centrosymétrie, l'orientation des plots entre eux est un autre paramètre permettant de varier les dispositifs d'authentification optique. Un exemple de tels plots disposés différemment selon leur orientation respective est illustré sur la figure 1 dans lequel un plot orienté selon une première orientation est entouré de plots adjacents orientés selon une seconde orientation différente de la première orientation.

Plus particulièrement, considérons le cas d'un dispositif tel qu'illustré sur la figure 4a. Les plots 2 ont une même orientation. Dans ce cas, pour une illumination d'une longueur d'onde de 800 nm avec des angles d'incidence et de diffraction de quelques dizaines de degrés, le pas du réseau d, défini par exemple entre les plots j et k, est préférentiellement fixé à 1,5 µm pour qu'il n'y est pas de différence de phase entre les réponses optiques des plots selon des angles d'illumination et d'observation de quelques dizaines de degrés. Une interférence constructive entre les réponses optiques des plots du réseau est ainsi créée qui favorise la génération de seconde harmonique.

Tout en gardant la même illumination, considérons maintenant le cas d'un dispositif tel qu'illustré sur la figure 4b. Ce dispositif est par exemple obtenu à partir du dispositif illustré sur la figure 4a en ajoutant, au milieu de chaque paire de plots (j, k) et entre chaque paire de plots (j, l), un plot identique aux autres (en forme, dimensions et composition) et présentant la même orientation. Le dispositif ainsi obtenu est identique au dispositif illustré sur la figure 4a excepté qu'il a un pas de réseau égal à d/2. Les réponses optiques non-linéaires des plots j et k s'en trouvent déphasées entre elles de 180°. Une interférence destructive entre les réponses optiques des plots est ainsi créée qui est impropre à permettre la génération de seconde harmonique.

Toujours en gardant la même illumination, considérons le cas d'un dispositif tel qu'illustré sur la figure 4c, par exemple obtenu à partir du dispositif illustré sur la figure 4a en ajoutant, au milieu de chaque paire de plots (j, k) et entre chaque paire de plots (j, l), un plot identique aux autres (en forme, dimensions et composition) mais présentant une orientation opposée. Par rapport au cas du dispositif illustré sur la figure 4b, un déphasage supplémentaire est introduit qui compense le déphasage précédemment évoqué, et l'on recrée une interférence constructive entre les réponses optiques des plots distants entre eux d'un pas de réseau d (voir par exemple les plots j et k sur la figure 4c), tout en ayant doublé la densité surfacique n de plots 2, donc en ayant quadruplé l'efficacité lumineuse du dispositif. Dans ce contexte, les plots ajoutés exaltent la génération de seconde harmonique des plots du dispositif tel qu'illustré sur la figure 4a.

Cet exemple illustre l'importance de la différence d'orientation entre des plots n'ayant pas une centrosymétrie. Cet exemple est généralisable à toute différence d'orientation (pas uniquement 180°) et/ou à toute différence de disposition des plots ajoutés (pas uniquement au milieu de deux plots distants du pas du réseau d), pourvues qu'elles se compensent.

En tenant compte des propriétés optiques des plots et des angles d'incidence et de diffraction, il est également possible d'ajouter à nouveau des plots sur des positions intermédiaires et en des orientations intermédiaires de façon à pouvoir augmenter l'efficacité lumineuse du dispositif.

Il est ainsi avantageusement permis une large variété de dispositifs d'authentification optique en complexifiant la forme et/ou la composition des plots et/ou en ayant une distribution en réseau de plots de formes différentes et/ou de compositions différentes et/ou de dimensions différentes et/ou d'orientations relatives différentes.

De façon générale, plus variés et plus complexes seront les dispositifs d'authentification optique, mieux ils joueront leur rôle de protection contre la contrefaçon, ne serait-ce que parce qu'un dispositif d'authentification optique plus complexe est d'autant plus difficile à reproduire.

La distance 32 moyenne entre deux plots adjacents du dispositif, distance illustrée sur la figure 1, est comprise entre 10 nm et 3 µm, Ainsi, la plus petite dimension caractéristique du dispositif d'authentification optique est égale à 10 nm.

La non-linéarité de la réponse optique du dispositif à son illumination est avantageusement exploitée. Effectivement, du fait de cette non-linéarité, il n'est pas possible, hors cas triviaux, de résoudre le problème inverse, qui consiste à retrouver les caractéristiques techniques du dispositif d'authentification optique (telles que le nombre, la répartition, la composition, la forme et la taille des plots) connaissant la réponse optique non-linéaire du dispositif à son illumination.

De plus, sachant qu'une étude par analyse locale, par exemple aux rayons X, afin d'observer une structure quelconque et être capable de la reproduire par rétro-ingénierie ne permet pas d'atteindre de façon fiable une résolution inférieure à 500 nm, l'on comprend pourquoi la reproduction du dispositif est quasi-impossible, voire impossible. Par ailleurs, il est à noter qu'il existe une autre méthode d'étude par analyse locale mettant en oeuvre un microscope à force atomique.

Par ailleurs, le dispositif a des dimensions dans le plan du support supérieures à 50 µm. Le dispositif comprend ainsi avantageusement au moins quelques dizaines, préférentiellement quelques milliers, voire quelques dizaines de milliers, de plots nanométriques.

L'efficacité lumineuse de la réponse optique non-linéaire du dispositif d'authentification optique dépend également de ses dimensions 31, 31' dans le plan du support. Une gamme de dimensions 31, 31' du dispositif d'authentification optique dans le plan du support 4, telles qu'illustrées sur la figure 1, peut être proposée qui s'inscrit dans un carré de 50 µm à 10 mm de côté, préférentiellement de 100 µm à 2 mm de côté. La dimension minimale envisagée de 50 µm est fixée de façon à s'assurer que le dispositif d'authentification optique comprend au moins quelques dizaines de plots nanométriques. La gamme de dimensions proposée comprend également la valeur de 1 mm. Cette valeur de 1 mm est préférée afin de faciliter l'illumination du dispositif, en en faisant une cible plus grande. Il est à noter que les dimensions du dispositif dans le plan du support ne sont limitées à 10 mm qu'à des fins pratiques, de plus grandes dimensions étant envisageables, bien qu'en conservant une taille millimétrique, le dispositif d'authentification optique n'est pas ostensiblement visible sur l'objet à authentifier ; aussi, si l'on ignore sa présence, son efficacité en termes de protection contre la contrefaçon s'en trouve accrue,

Comme discuté plus haut, le réseau est défini homogène dans le sens où, pour une illumination déterminée, la réponse optique non-linéaire du dispositif est constante pour la totalité du dispositif, quelle que soit la partie du dispositif qui est illuminée, pour peu que ladite partie comprenne au moins une pluralité de plots 2. Dès lors, il suffit que les caractéristiques de l'illumination et du dispositif permettent d'obtenir dans la direction d'observation une efficacité lumineuse suffisante pour permettre l'authentification optique du dispositif quelle que soit la partie du dispositif qui est effectivement illuminée. En ce sens, la forme extérieure du dispositif, carrée (comme illustrée sur la figure 1), circulaire ou autres, n'influence pas la réponse optique non-linéaire du dispositif à son illumination.

La structure du réseau est également un paramètre important du dispositif d'authentification optique. Dans un mode de réalisation, le réseau est cristallin. Typiquement, les plots 2 sont distribués sur les noeuds d'un réseau plan carré, triangulaire, hexagonal, etc. Dans un autre mode de réalisation, le réseau plan est quasi-cristallin. Typiquement, les plots sont distribués aux noeuds d'un pavage de Penrose.

En outre, la distribution de la première pluralité de plots du dispositif peut consister en une juxtaposition et/ou une superposition de réseaux cristallins et/ou quasi-cristallins. A titre d'exemple non limitatif, une juxtaposition de réseau cristallin peut consister à juxtaposer un réseau hexagonal et un réseau monoclinique bidimensionnel de sorte qu'au milieu de chaque hexagone ou de certains hexagones du réseau hexagonal se situe un noeud du réseau monoclinique bidimensionnel. Dans le cas d'une juxtaposition de réseaux, le dispositif d'authentification optique reste donc essentiellement bidimensionnel.

À titre d'exemple non limitatif, une superposition de réseaux consiste à distribuer les plots en un réseau carré au dessus d'un autre réseau carré de plots avec ou sans décalage en translation et/ou en rotation de l'un par rapport à l'autre. Dans le cas d'une superposition de réseaux, les couches de plots formant chaque réseau peuvent être jointes par une de leurs surfaces par l'intermédiaire d'une couche de scellement en matériau optiquement neutre et transparent, les plots distribués en un même réseau pouvant être eux-mêmes noyés dans ce matériau.

Dans le cas d'une superposition de réseaux, le dispositif d'authentification optique est tridimensionnel, son épaisseur étant proportionnelle au nombre de réseaux superposés.

Il est à noter qu'on entend par matériau neutre et transparent un matériau qui n'influe pas sur les propriétés optiques non-linéaires du plot et/ou du dispositif d'authentification. Il est à noter également que le support peut être lui-même constitué d'un matériau optiquement neutre et transparent.

A titres d'exemples non limitatif et non exhaustif, le matériau optiquement neutre et transparent consiste en de la silice (SiO2) ou en du nitrure de silicium (Si3N4), ce dernier présentant l'avantage de ne pas contenir d'oxygène risquant d'oxyder l'argent ou l'or qui compose éventuellement les plots.

Plusieurs structures en réseau du dispositif sont donc envisageables qui permettent autant de variantes plus ou moins complexes du dispositif d'authentification optique rendant encore plus improbable la reproduction dudit dispositif.

Pour une illumination appropriée donnée, essentiellement déterminée par sa longueur d'onde, son angle d'incidence et sa polarisation, l'efficacité lumineuse dépend des données caractéristiques du dispositif d'authentification optique (telles que le nombre, la distribution, la composition, la forme et la taille des plots). Celles-ci sont choisies par exemple de façon interdépendante et empirique de sorte que ladite illumination permette d'obtenir une efficacité lumineuse de l'ordre de quelques centaines à quelques milliers de picomètres par volt.

Concernant la fabrication du dispositif d'authentification optique, la lithographie optique ou la nanolithographie à faisceau d'électrons ou une technique mettant en oeuvre un faisceau d'ions focalisé sont des méthodes éprouvées, mais qui restent lentes pour la production en série. La lithographie dite « nanoimprint » est une technique de fabrication plus récente et permet une production en série plus rapide. Des solutions de mise en oeuvre de cette technique sont disponibles commercialement (Nanonex, NIL Technology, ...). De plus, cette technique offre une résolution de l'ordre de 10 nm et fait aujourd'hui encore l'objet de développements pour atteindre des résolutions meilleures. Ces techniques permettent d'imprimer des plots nanométriques sur une grande surface du support par rapport aux dimensions 31, 31' du dispositif dans le plan du support. Une fois imprimée, cette grande surface est avantageusement découpée pour produire une pluralité de dispositifs d'authentification optique.

Du fait que le dispositif d'authentification optique est de dimensions millimétriques et comprend des plots nanométriques, il est relativement fragile. Il est avantageusement proposé de recouvrir les plots distribués en réseau d'une couche protectrice, afin d'accroître la longévité du dispositif. Ladite couche protectrice est composée en un matériau optiquement neutre et transparent, comme de la silice (SiO2 ou du nitrure de silicium (Si3N4).

Pour certaines applications du dispositif, sa longévité peut ne pas être requise. Auquel cas, il est inutile de le recouvrir d'une couche protectrice et le dispositif d'authentification optique comprend avantageusement une seconde pluralité de plots nanométriques réalisés en un matériau optiquement neutre et transparent, tel que de la silice (SiO2) ou du nitrure de silicium (Si3N4). Lesdits plots optiquement neutres et transparents servent de leurres, rendant avantageusement toute tentative de reproduction encore plus difficiles.

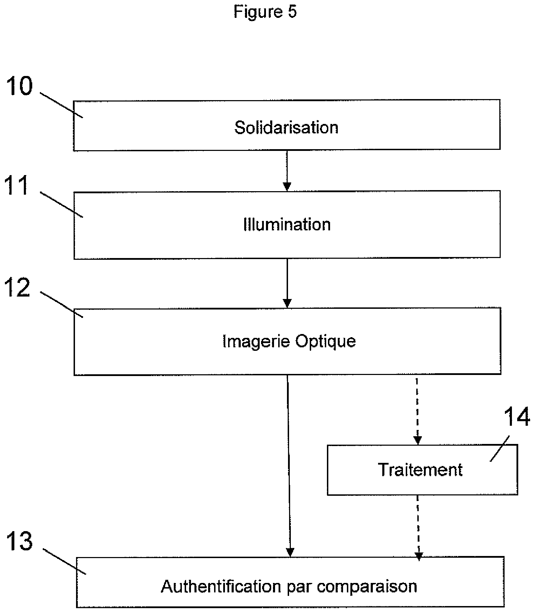

Le procédé et le système correspondant d'authentification optique selon l'invention va maintenant être décrit en référence aux figures 3 et 5.

Comme illustré sur la figure 5, le procédé d'authentification optique comprend une étape préliminaire de solidarisation 10 consistant à rendre solidaires un dispositif d'authentification optique et un objet à authentifier (ou un appendice solidaire de celui-ci), par exemple par fixation, collage, insertion, etc. Cette étape préliminaire de solidarisation 10 n'exclut pas le cas dans lequel le dispositif est directement imprimé, par exemple par 'nanoimprint', sur l'objet, ladite solidarisation consistant alors en l'impression du dispositif et le support étant formé de l'objet lui-même.

Dans son acceptation la plus large et comme illustré sur la figure 5, le procédé d'authentification optique, comprend une étape d'illumination 11, une étape d'imagerie optique 12 et une étape de comparaison 13.

L'étape d'illumination 11 est réalisée par une source de lumière cohérente, plus particulièrement monochromatique ou quasi-monochromatique en onde plane progressive, d'au moins une partie quelconque du dispositif d'authentification optique pour peu que ladite partie quelconque comprenne au moins un ensemble de plots 2. Cette illumination est réalisée selon un angle d'incidence, une longueur d'onde et une polarisation déterminés. L'angle d'incidence de l'illumination est préférentiellement compris entre 0 et 75° par rapport à la normale au plan du support. La longueur d'onde de l'illumination est par exemple de 800 nm (infrarouge). Toutefois, pour des plots métalliques, par exemple composés d'or et/ou d'argent, il est envisagé que l'illumination ait une longueur d'onde située dans le spectre allant du proche infrarouge jusqu'au milieu du spectre visible.

Notamment, mais pas exclusivement, lorsqu'une puissance moyenne d'illumination suffisamment basse pour ne pas détruire le dispositif d'authentification optique est souhaitée, l'illumination appropriée est produite par un laser à impulsion picoseconde ou femtoseconde. Ce type de laser permet en effet, par rapport à un laser au rayonnement continu, de transmettre au total, par son illumination impulsionnelle, moins d'énergie, donc moins de chaleur, au dispositif d'authentification optique, de façon à ne pas le détruire ou à ne pas trop le détériorer de sorte que le dispositif d'authentification optique puisse servir à authentifier plusieurs fois l'objet sur lequel il est fixé.

Dans un mode de réalisation du procédé d'authentification optique, la source de lumière cohérente est un laser femtoseconde qui produit une impulsion ultrabrève prenant la forme d'une oscillation sinusoïdale propagative de champ électromagnétique ayant par exemple une fréquence de répétition de 80 MHz, une durée de l'ordre de 100 fs et une longueur d'onde de 800 nm.

Dans ce mode de réalisation particulier, pour un plot unique d'efficacité lumineuse moyenne, une puissance d'illumination moyenne d'environ 0,03 mW focalisée sur un diamètre de 400 nm et intégrée sur une seconde permet de produire le minimum de photons d'énergie double acceptable pour des expériences en laboratoire. Cette puissance moyenne et ce diamètre de focalisation de l'illumination correspondent à une intensité moyenne de 2.10⁸ W/m², qui, intégrée sur une seconde, définit une valeur seuil de puissance lumineuse incidente au-delà de laquelle le plot est détérioré, voire détruit.

Pour des applications industrielles, c'est-à-dire pour un ensemble de plots 2, une illumination d'une intensité moyenne de 2,10¹⁰ W/m², intégrée sur une seconde, permet de produire davantage de photons d'énergie double pour une caractérisation plus fine de la réponse optique non-linéaire, Notons que, pour le même résultat, la durée d'intégration de la réponse optique non-linéaire peut être réduite, par exemple à 1/10^{ème} de seconde, pour peu que l'intensité moyenne soit augmentée proportionnellement à la racine carrée de la réduction de la durée d'intégration, soit par le même exemple à environ 2.10¹¹ W/m².

Par exemple, sous une illumination d'une intensité de 2.10¹¹ W/m², égale à celle définissant la valeur seuil de puissance lumineuse incidente au-delà de laquelle un plot est détérioré, et focalisée sur une surface de 0,16 µm², égale à la surface d'un carré de 400 nm de côté, un dispositif d'authentification optique tel que décrit plus haut comprenant des plots d'une efficacité lumineuse moyenne reçoit une puissance moyenne de 30 mW et produit de 10⁵ à 10⁷ photons d'énergie double en 1/10^{ème} de seconde, ce qui représente une réponse optique non-linéaire exploitable aux fins d'au moins une authentification, puisque les plots sont faiblement détériorés sous une illumination de cette intensité et pour ce temps d'intégration.

Toutefois, la même illumination peut être étendue, par exemple d'une surface de 0,16 µm² à une surface de 1 mm² ou plus, suivant les dimensions du dispositif dans le plan de son support, de sorte à réduire la puissance surfacique transmise, donc le risque d'endommagement du dispositif, tout en gardant une même puissance lumineuse diffusée.

Par exemple, sous une illumination d'une intensité moyenne de 2.10⁷ W/m², inférieure d'un facteur 10 à celle définissant la valeur seuil de puissance lumineuse incidente au-delà de laquelle un plot est détérioré, et étendue sur une surface de 1 mm², soit une puissance moyenne de 20 W, un dispositif d'authentification optique tel que décrit plus haut comprenant des plots d'une efficacité lumineuse moyenne produit de 10⁸ à 10¹¹ photons d'énergie double en 1/10^{ème} de seconde, ce qui représente une réponse optique non-linéaire largement exploitable aux fins de plusieurs authentifications, puisque les plots ne sont pas ou peu détériorés sous une illumination de cette intensité et pour ce temps d'intégration.

Pour détruire le dispositif de sorte qu'il ne serve qu'à une et une seule authentification, il suffit de l'illuminer avec une puissance lumineuse incidente supérieure d'un ordre de grandeur à la valeur du seuil de puissance lumineuse incidente, soit dans l'exemple précédent avec une puissance de 2000 W. Pour le même résultat, il est possible de remplacer l'illumination d'une puissance de 2000 W pendant 1/10^{ème} de seconde par une illumination de 200 W pendant 1 seconde.

En droite ligne avec les considérations ci-dessus, l'étape d'illumination peut être réalisée par une illumination d'une source de lumière focalisée ou étalée. Une lentille ou une association de lentilles disposée entre la source de lumière et le dispositif cible permet de focaliser ou étaler l'illumination, de façon à illuminer plus ou moins partiellement le dispositif d'authentification optique.

De façon générale et comme démontré plus haut, un faisceau laser étalé de sorte d'illuminer la totalité du dispositif d'authentification permet de répartir la puissance transmise au dispositif d'authentification optique sur plus de plots. Le dispositif d'authentification optique est donc moins détérioré par une illumination étalée ; sa longévité et la reproductibilité de sa fonction d'authentification en sont, pour certaines applications, avantageusement accrues.

Dans un mode de réalisation, l'illumination, polarisée, est contrôlée par un polariseur disposé entre la source de lumière et le dispositif cible. Une illumination essentiellement orientée selon une direction d'interférences constructives des plots du dispositif permet d'exploiter pleinement leur non centrosymétrie en exaltant avantageusement la génération de seconde harmonique. Plus particulièrement, pour les plots référencés c, d et e sur la figure 2, une polarisation de l'illumination essentiellement perpendiculaire au plan du support permet de produire plus de photons de fréquence double par rapport à une polarisation de l'illumination essentiellement parallèle au plan du support. Pour les plots référencés g, h et i sur la figure 2, une polarisation de l'illumination essentiellement parallèle au plan du support permet de produire plus de photons de fréquence double par rapport à une polarisation de l'illumination essentiellement perpendiculaire au plan du support.

Comme illustré sur la figure 3, l'étape d'imagerie optique est réalisée par un dispositif d'imagerie optique 120 pour capter en champ lointain la réponse optique non-linéaire du dispositif à son illumination, ladite réponse étant une figure de diffraction 6 caractéristique de la réponse optique non-linéaire captée.

On comprend ainsi que de l'efficacité lumineuse du dispositif d'authentification optique dépend la lisibilité de la réponse optique non-linéaire, autrement dit la netteté et le nombre de taches de diffraction que comporte la figure de diffraction obtenue. Conséquemment, de l'efficacité lumineuse atteinte dépend la qualité, la fiabilité et donc le résultat de l'authentification.

Plus particulièrement, la figure de diffraction 6 consiste en un certain nombre de tâches de diffraction disposées de façon concentrique. Les tâches ont une intensité d'autant plus forte que l'efficacité lumineuse du dispositif est élevée; les taches plus excentrées sont généralement moins intenses. De plus, la distance entre le dispositif 1 illuminé et le dispositif d'imagerie optique 120 correspond de préférence au meilleur compromis entre nombre et intensité des tâches de diffraction. En effet, plus ladite distance est grande, plus la figure de diffraction comporte de tâches, mais moins celles-ci sont intenses. Au contraire, plus ladite distance est faible, moins la figure de diffraction comporte de tâches, mais plus celles-ci sont intenses.

Le dispositif d'imagerie optique 120, ou le capteur, est plus particulièrement propre à capter en champ lointain les photons issus du processus de génération de seconde harmonique qui produisent ainsi la figure de diffraction 6 caractéristique du dispositif d'authentification optique.

A titre d'exemple non limitatif, le dispositif d'imagerie optique peut plus particulièrement être un objectif de microscope associés à des détecteurs, tels que des photodiodes ou des capteurs photographiques du type CCD, disposés à cet effet à une distance déterminée, comprise entre quelques millimètres et quelques centimètres, du dispositif d'authentification optique. Le dispositif d'imagerie optique peut plus particulièrement être une caméra du type CCD dédiée à l'enregistrement de faibles intensités lumineuses. Le recours à une caméra du type CCD intensifiée est également envisagé, mais n'est généralement pas requis.

D'autres positions des détecteurs (plus proches) sont envisageables, ce qui impliquent l'utilisation d'un propagateur de Fresnel pour le calcul de la réponse.

De façon générale, il est préférable que la figure de diffraction 6 soit composée d'une ou plusieurs dizaines de tâches de diffraction. Il est à noter que le nombre et la disposition des tâches de diffraction sur la figure de diffraction dépend également de la longueur d'onde, de l'angle d'incidence et de la polarisation de l'illumination.

L'étape de comparaison 13 peut être réalisée par un ordinateur relié à une base de données 5 et muni d'un logiciel ou peut être réalisée à l'oeil nu. Elle consiste à comparer la figure de diffraction 6 précédemment obtenue à une figure de diffraction de référence préalablement stockée dans la base de données 5.

Ladite base de données doit être préétablie en stockant la figure de diffraction de chaque dispositif d'authentification mis sur le marché de façon à ce qu'elle serve de référence afin de comparaison lors d'authentification(s) ultérieure(s).

Cette base de données peut être réalisée de deux façons différentes.

Premièrement, les étapes d'illumination et d'imagerie optique sont réalisées sur chaque dispositif préalablement à sa mise sur le marché et chaque figure de diffraction obtenue est sauvegardée dans une base de données 5, par exemple sous la forme d'une table, éventuellement de façon corrélée aux caractéristiques de l'illumination dont la longueur d'onde, l'angle d'incidence, la polarisation et la distance entre le dispositif 1 illuminé et le dispositif d'imagerie optique 120.

Deuxièmement, s'il n'y a pas de formule ou de modèle mathématique qui permette de passer des propriétés optiques du dispositif d'authentification optique à ses caractéristiques, il existe en revanche des modèles de calcul permettant de calculer la figure de diffraction sur la base des caractéristiques du dispositif et de l'illumination. Pour mettre ce fait à profit, le procédé d'authentification optique prévoit :
- une étape de simulation réalisée par un ordinateur muni d'un logiciel propre à calculer au moins, à partir de données caractérisant le dispositif d'authentification optique et l'illumination, la figure de diffraction correspondante, et
- une étape de sauvegarde dans une base de données de chaque figure de diffraction calculée, par exemple sous la forme d'une table, éventuellement de façon corrélée aux caractéristiques de l'illumination dont la longueur d'onde, l'angle d'incidence, la polarisation et la distance entre le dispositif illuminé et le dispositif d'imagerie optique.

Cette étape de simulation permet non seulement de calculer la figure de diffraction associée à tel ou tel dispositif d'authentification optique, mais permet également de juger de l'intérêt de choisir telle ou telle valeur pour chacune des caractéristiques du dispositif d'authentification optique, par exemple en fonction du nombre des tâches de diffraction et leurs intensités tels que calculés. On comprend que cette étape de simulation revêt également un intérêt certain pendant la phase de recherche empirique des caractéristiques *ad hoc* du dispositif d'authentification optique.

Il est à noter que la base de données n'est pas restreinte à une figure de diffraction par dispositif d'authentification optique. En effet, pour un même dispositif d'authentification optique, une multitude de figures de diffraction peut être obtenue et archivée, chacune déterminée pour une longueur d'onde et/ou un angle d'incidence et/ou une polarisation de l'illumination ou pour une distance entre le dispositif d'authentification optique et le dispositif d'imagerie optique 120.

De plus, les modèles de calcul mis en oeuvre lors de cette étape de simulation peuvent permettre de définir une tolérance pour la comparaison. Toutefois, il peut être aussi bien estimé une tolérance raisonnable sur la seule base d'une analyse de figures de diffraction obtenues par les étapes d'illumination et d'imagerie optique.

L'établissement d'une base de données *ad hoc* via lesdits modèles de calcul est particulièrement intéressant lorsque le procédé d'authentification prévoit que l'étape d'illumination 11 est réalisée par une source de lumière suffisamment puissante pour détruire au moins la partie illuminée du dispositif d'authentification optique, par exemple de sorte qu'une et une seule authentification par dispositif d'authentification optique soit possible. Toutefois, il est également possible de produire plusieurs fois le même dispositif d'authentification optique, d'en illuminer un (en le détruisant) pour observer et archiver la figure de diffraction obtenue, et ainsi se servir de cette dernière comme référence afin d'authentifier les dispositifs d'authentification optique identiques.

Avantageusement et comme illustré sur la figure 5, le procédé comprend en outre une étape de traitement 14 de la figure de diffraction 6. Cette étape de traitement peut être réalisée, entre l'étape d'imagerie optique 12 et l'étape de comparaison 13, ou préférentiellement après l'étape de comparaison 13, par un ordinateur muni d'un logiciel propre à déterminer, par exemple via une table ou un algorithme de passage, une valeur binaire ou alphanumérique caractéristique de la figure de diffraction. Cette étape de traitement peut en outre comprendre une étape de cryptographie supplémentaire. Ainsi, le procédé d'authentification optique permet avantageusement de faire correspondre une valeur binaire ou alphanumérique, du type code-barres ou numéros de série, à au moins une figure de diffraction; les usages par comparaison, notamment en identification/authentification, des code-barres ou numéros de série étant usuels, l'étape de comparaison 13 qui suit est avantageusement rendue triviale.

Le procédé est donc mis en oeuvre par un appareillage dédié, lourd et relativement coûteux. Toutefois, cet appareillage est destiné à n'équiper que des points de passages et/ou stratégiques, tels que des aéroports, des douanes, des banques ou des bureaux de certification.

De plus, le dispositif d'authentification optique est avantageusement adaptable aux contraintes d'exploitation dans la limite des gammes de valeurs données pour les différents paramètres le caractérisant. Par exemple, si tel laser femtoseconde et/ou tel dispositif d'imagerie optique sont choisis pour des raisons de coût, les paramètres caractérisant le dispositif d'authentification optique sont choisis en conséquence, de sorte que l'illumination par ce laser femtoseconde soit propre à permettre d'obtenir une figure de diffraction par ce dispositif d'imagerie optique, pour *in fine* permettre l'authentification.

Pour des objets lourds et/ou encombrants, tels que des pièces aéronautiques peuvent l'être, qui ne se prêtent pas à une disposition simple dans l'appareillage dédié, un appendice fixé solidairement par une première extrémité auxdits objets est prévu, à la seconde extrémité duquel est fixé solidairement le dispositif d'authentification optique, de sorte que ce dernier puisse être disposé dans l'appareillage dédié.

## Revendications

1. Dispositif d'authentification optique (1) **caractérisé en ce qu'**il comprend une première pluralité de plots (2) nanométriques distribuée à la surface d'un support pour former un réseau (3) homogène, chaque plot (2) de la première pluralité étant un diffusant et diffractant optique non-linéaire.

2. Dispositif d'authentification optique selon la revendication 1, **caractérisé en ce que** chaque plot (2) s'étend à distance du support selon un axe et a, dans un plan perpendiculaire à cet axe, une section de la forme d'un disque, oblongue, ovale ou de la forme d'un trèfle ou d'une étoile.

3. Dispositif d'authentification optique selon la revendication 1 ou la revendication 2, **caractérisé en ce que** les plots (2) non centrosymétriques sont distribués sur le support selon des orientations différentes, de sorte de créer une interférence constructive entre les réponses optiques non-linéaires des plots (2).

4. Dispositif d'authentification optique selon l'une des revendications 1 à 3, **caractérisé en ce que** chaque plot (2) comprend :
- une ou plusieurs parties (21a, 21 b, 21c, 21d, 21e, 21 f, 21g), l'une au moins des parties comprenant du niobiate de lithium, des cristaux de type KTP ou des cristaux de type KDP, ou
- plusieurs parties, dont au moins une partie comprend de l'or et au moins une autre partie comprend de l'argent, ou
- plusieurs parties dont au moins une partie comprend de l'or ou de l'argent et dont au moins une autre partie comprend du niobiate de lithium, des cristaux de type KTP ou des cristaux de type KDP, ou
- une partie de forme non centrosymétrique comprenant de l'or ou de l'argent.

5. Dispositif d'authentification optique selon l'une quelconque des revendications précédentes, **caractérisé en ce que** chaque plot (2) s'étend à distance du support selon une hauteur (22) comprise entre 30 et 80 nm et sa section dans un plan perpendiculaire à cette hauteur a des dimensions (23) comprises entre 100 et 250 nm.

6. Dispositif d'authentification optique selon l'une quelconque des revendications précédentes, **caractérisé en ce que** la distance (32) entre deux plots adjacents du dispositif est comprise entre 10 nm et 3 µm.

7. Dispositif d'authentification optique selon l'une quelconque des revendications précédentes, **caractérisé en ce que** le dispositif a des dimensions (31, 31') dans le plan du support supérieures à 50 µm.

8. Dispositif d'authentification optique selon l'une quelconque des revendications précédentes, **caractérisé en ce que** la première pluralité de plots nanométriques est distribuée pour former un réseau (3) homogène cristallin ou quasi-cristallin.

9. Dispositif d'authentification optique selon l'une quelconque des revendications précédentes, **caractérisé en ce que** la première pluralité de plots nanométriques est distribuée pour former une juxtaposition ou une superposition de réseaux cristallins et/ou quasi-cristallins.

10. Dispositif d'authentification optique selon l'une quelconque des revendications précédentes, **caractérisé en ce qu'**il est imprimé par lithographie dite « nanoimprint », par lithographie à faisceau d'électrons, ou par lithographie holographique, ou, est usiné par une technique mettant en oeuvre un faisceau d'ions focalisé.

11. Dispositif d'authentification optique selon l'une quelconque des revendications précédentes, **caractérisé en ce que** la première pluralité de plots nanométriques est recouverte d'une couche protectrice réalisée en un matériau optiquement neutre et transparent.

12. Dispositif d'authentification optique selon l'une quelconque des revendications 1 à 10, **caractérisé en ce que** le dispositif comprend en outre une seconde pluralité de plots nanométriques réalisés en un matériau optiquement neutre et transparent.

13. Procédé d'authentification optique pour authentifier un objet, **caractérisé en ce qu'**il comprend :
- une étape préliminaire de solidarisation (10), où l'on rend solidaires un dispositif d'authentification optique selon l'une quelconque des revendications 1 à 11 et un objet à authentifier ou un appendice solidaire de celui-ci,
- une étape d'illumination (11) par une source de lumière cohérente (monochromatique ou quasi-monochromatique en onde plane progressive) d'au moins une partie du dispositif d'authentification optique pour produire une figure de diffraction,
- une étape d'imagerie optique (12) réalisée par un dispositif d'imagerie optique (120) pour capter en champ lointain ladite figure de diffraction (6), et
- une étape de comparaison (13) de la figure de diffraction précédemment obtenue à une référence préalablement stockée dans une base de données (5) pour permettre l'authentification de l'objet.

14. Procédé d'authentification optique selon la revendication 13, **caractérisé en ce que** l'illumination est d'une puissance déterminée propre à détruire au moins la partie du dispositif d'authentification optique qu'elle illumine.

15. Procédé d'authentification optique selon la revendication 13, **caractérisé en ce qu'**il comprend en outre une étape de traitement (14) de la figure de diffraction 6 propre à lui faire correspondre une valeur binaire ou alphanumérique caractéristique.

16. Procédé d'authentification optique selon la revendication 13, **caractérisé en ce qu'**il comprend en outre une étape de simulation réalisée par un ordinateur muni d'un logiciel propre à calculer une figure de diffraction de référence sur la base de données caractérisant le dispositif d'authentification optique, l'angle d'incidence, la longueur d'onde et la polarisation de l'illumination et, une étape de sauvegarde de ladite figure de diffraction de référence dans une base de données reliée audit ordinateur.
